# EUROPÄISCHE PATENTSCHRIFT

(11) **EP 0 818 427 B1**
(45) Veröffentlichungstag und Bekanntmachung des Hinweises auf die Patenterteilung: **23.04.2003**
(21) Anmeldenummer: 97110714.9
(22) Anmeldetag: 01.07.1997
(51) Int. Cl.: C04B 11/02, C04B 11/036, C01F 11/46

(54) **Verfahren zur Herstellung von phasenreinem Calciumsulfat-Beta-Halbhydrat**
Process for producing pure calcium sulfate beta-hemihydrate
Procédé de production d'hémidrate de sulfate de calcium du type bèta pur

(30) Priorität: 08.07.1996 DE 19627249
(43) Veröffentlichungstag der Anmeldung: 14.01.1998
(73) Patentinhaber: Rheinische Baustoffwerke GmbH, 50416 Köln (DE); SPM Gipssysteme GmbH & Co. KG, 06427 Nienburg (DE)
(72) Erfinder: Koslowski, Thomas, Dr., 52072 Aachen (DE); Morgenroth, Henning, Dr., 52152 Simmerath (DE); Hessler, Klaus-Michael, 52134 Herzogenrath (DE)

(56) Entgegenhaltungen:
- DE-A- 2 458 091
- DE-A- 3 502 637
- DE-A- 3 738 301
- FR-A- 2 167 741
- GB-A- 1 297 535
- GB-A- 1 438 234
- US-A- 4 247 518
- PATENT ABSTRACTS OF JAPAN vol. 015, no. 034 (C-0799), 28. Januar 1991 & JP 02 271941 A (MITSUBISHI HEAVY IND LTD;OTHERS: 01), 6. November 1990

## Beschreibung

Die Erfindung betrifft ein Verfahren zur Herstellung von praktisch phasenreinem Calciumsulfat-β-Halbhydrat.

Calciumsulfat-β-Halbhydrat ist eine Gipsphase, die durch Calcinieren von Calciumsulfat-Dihydrat unter technischen Bedingungen im Temperaturbereich von 125 bis 180°C entsteht.

Als Rohstoff für die Herstellung von Calciumsulfat-β-Halbhydrat wurde in der Vergangenheit überwiegend körniger Naturgips verwendet. Gegenwärtig kommen verstärkt feinteilige Rohstoffe wie beispielsweise REA- oder Chemiegips zum Einsatz, deren Anteil in Zukunft deutlich steigen wird.

Zur Durchführung der Calcinierung sind beispielsweise folgende Aggregate in Gebrauch:
Drehrohrofen, direkt und indirekt beheizt,
Mahl-Brenn-Calcinatoren,
Trägergas-Calcinatoren,
Kocher (diskontinuierlich/kontinuierlich).

Die Calcinierprodukte sind allgemein Mehrphasengemische, die in Abhängigkeit vom jeweiligen Prozeß neben Calciumsulfat-β-Halbhydrat mehr oder weniger hohe Anteile an Calciumsulfat-Dihydrat und an hochreaktivem, hygroskopischem, an Luft zu Calciumsulfat-β-Halbhydrat reagierenden Calciumsulfat-Anhydrit-III enthalten.

Für die Herstellung moderner Baustoffe wie beispielsweise Putzgips ist es jedoch notwendig, Calcinierprodukte als Basisgipse zu erzeugen, die sich durch hohe Phasenreinheit (insbesondere frei von Calciumsulfat-Dihydrat), Gleichmäßigkeit und Stabilität auszeichnen.

Die Calciumsulfat-Dihydrat-Freiheit von Basisgipsen wird gegenwärtig durch hohe Temperaturen und lange Verweilzeiten während des Calcinierprozesses sichergestellt, wobei die Bildung von Calciumsulfat-Anhydrit-III in Kauf genommen wird, der in nachgeschalteten Verfahrensschritten nur ungenügend eliminiert wird.

Außerdem ist es aus DE 28 15 792 A1 bekannt, aus der Phosphorsäureproduktion stammendes, feinteiliges Calciumsulfat-Dihydrat, das Mischkristall-Fremdkörper enthält, nach oberflächlichem Waschen in einem Calcinieraggregat einer zweistufigen Wärmebehandlung zu unterziehen, wobei das Calciumsulfat-Dihydrat in einer ersten Stufe während 30 bis 90 min auf eine Temperatur von 110 bis 150°C erhitzt und danach in einer zweiten Stufe für 10 min bis mehrere Stunden bei 130 bis 180°C konditioniert wird, wobei in der zweiten und gegebenenfalls auch in der ersten Stufe bei einem Wasserdampfpartialdruck > 133 mbar gearbeitet wird. Das Konditionieren erfolgt in Gegenwart von Kalk, um die Einflüsse von Ionen von Fremdstoffen, die aus der Phosphorsäureproduktion stammen, durch Entmischung zu beseitigen, wobei insbesondere wasserhaltiges zweibasisches Calciumphosphat in seine wasserfreie Form, die eine sehr geringe Löslichkeit aufweist, überführt wird. Der Kalk entfaltet seine Wirksamkeit nur bei Vorhandensein eines gewissen Feuchtigkeitsgrads, weshalb bei dem genannten Wasserdampfpartialdruck gearbeitet wird. Hierdurch läßt sich ein Gips erzeugen, der natürlichem Gips gleichkommt und somit ein Phasengemisch darstellt.

Aufgabe der Erfindung ist es, ein Verfahren zu schaffen, das es ermöglicht, möglichst phasenreines Calciumsulfat-β-Halbhydrat herzustellen.

Diese Aufgabe wird entsprechend den Merkmalen des Anspruchs 1 durch ein Verfahren zur Herstellung von Calciumsulfat-β-Halbhydrat gelöst, bei dem feinteiliges Calciumsulfat-Dihydrat in trockenem Zustand in einem Calcinieraggregat kontinuierlich durch entsprechende Wärmeeinwirkung teilentwässert wird, wobei in einer ersten Stufe das feinteilige Calciumsulfat-Dihydrat auf eine Temperatur von 110 bis 140°C erhitzt und bis zu einem Kristallwassergehalt von 6-9 Masse % entwassert wird und danach in einer zweiten Stufe auf einer Temperatur von 110 bis 140°C unter Wasserdampfatmosphäre von 200-900 mbar Wasserdampfpartialdruck solange gehalten wird, bis praktisch phasenreines Calciumsulfat-β-Halbhydrat vorliegt.

Hierbei wird kontinuierlich in einer ersten Stufe feinteiliges Calciumsulfat-Dihydrat auf eine Temperatur von etwa 110 bis 140°C, vorzugsweise etwa 120 bis 130°C, erhitzt, eine definierte Verweilzeit auf dieser Temperatur gehalten und danach in einer zweiten Stufe bei einer Temperatur von 110 bis 140°C, vorzugsweise 120 bis 130°, unter definierter Wasserdampfatmosphäre solange gehalten, bis praktisch phasenreines Calciumsulfat-β-Halbhydrat vorliegt. Der Feuchtigkeitsgehalt des als Rohmaterial verwendeten Calciumsulfat-Dihydrats ist dabei < 0,2 Masse-%.

Es wurde gefunden, daß sich beim Calcinieren von feinteiligem, trockenem Calciumsulfat-Dihydrat, wenn man den Kristallwassergehalt gegenüber der Reaktionsdauer aufträgt, unter bestimmten Bedingungen ein Plateau ergibt, das bei etwa 7 bis 6,5 Masse-% bezogen auf Anhydrit (a.A.) Kristallwassergehalt liegt, vgl. beigefügtes Diagramm. Der Kristallwassergehalt ist abhängig von der Reinheit des Calciumsulfat-Dihydrats, der im dargestellten Fall > 97 Masse-% ist. Die Kurven des Diagramms zeigen den Kristallwassergehalt, zudem die Materialtemperatur und den Wasserdampfpartialdruck während der Reaktionsdauer. Im Diagramm ist auf der linken Ordinate die Materialtemperatur in °C sowie der Wasserdampfpartialdruck in 10 mbar, auf der rechten Ordinate der Kristallwassergehalt in Masse-% (a.A.) und auf der Abszisse die Reaktionsdauer in Stunden:Minuten dargestellt.

Wenn man das Ausgangsmaterial in der ersten Stufe auf etwa 110 bis 140°C, vorzugsweise 120 bis 130°C, erhitzt und bei definiertem Wasserdampfpartialdruck eine definierte Verweildauer von zweckmäßigerweise etwa 20 bis 180 min hält, liegt ein Phasengemisch aus Calciumsulfat-β-Halbhydrat und Calciumsulfat-Dihydrat mit einem Kristallwassergehalt von etwa 6 bis 9 Masse-%, vorzugsweise etwa 7 bis 8 Masse-%, vor (in Abhängigkeit von der Calciumsulfat-Dihydrat-Reinheit, hier >97%). Um praktisch phasenreines Calciumsulfat-β-Halbhydrat zu erhalten, ist nun dafür zu sorgen, daß der noch vorhandene Anteil an Calciumsulfat-Dihydrat in Calciumsulfat-β-Halbhydrat umgewandelt wird. Hierzu wird das Phasengemisch in der zweiten Stufe bei niedrigen Materialtemperaturen und hohem, definiertem Wasserdampfgehalt solange gehalten, bis nahezu phasenreines Calciumsulfat-β-Halbhydrat vorliegt.

Dann ist eine anschließende Abkühlung des calciniertes Materials auf ca. 50°C oder weniger, gegebenenfalls unter Wasserdampfatmosphäre, zweckmäßig.

Das calcinierte Material kann aber auch gegebenenfalls gemäß einer dritten Stufe auf eine Temperatur im Bereich von etwa 40 bis 70°C, insbesondere 50 bis 60°C, abgekühlt und gleichzeitig oder sich mit der Abkühlung überschneidend oder nach der Abkühlung auf dieser Temperatur in einer definierten Wasserdampfatmosphäre während etwa 10 min bis 2 h, insbesondere 30 min bis 60 min, gehalten werden. Der Wasserdampfpartialdruck ist dann derart zu wählen, daß er unterhalb des maximalen Wertes bei der Haltetemperatur, beispielsweise bei 30 bis 90% des Maximalwertes bei der vorgesehenen Haltetemperatur, liegt, damit es zu keiner Taupunktunterschreitung kommt.

Das Kühlen kann mittels Schnecken, Trommeln, Drehrohr- oder Wirbelbettaggregaten und dergleichen vorgenommen werden.

Sollte sich ein Mahlen des calcinierten Produkts anschließen, ist es zweckmäßig, wenn hierbei die Temperatur des Produkts kleiner als etwa 50°C gehalten wird.

Dieses Verfahren läßt sich großtechnisch realisieren, so daß sich auf diese Weise große Mengen an Calciumsulfat-Dihydrat-freiem, praktisch phasenreinem Calciumsulfat-β-Halbhydrat kontinuierlich herstellen lassen, bei dem > 98 Masse-% des im Rohstoff enthaltenen Calciumsulfat-Dihydrats in Calciumsulfat-β-Halbhydrat umgewandelt sind.

Als Rohstoff eignet sich insbesondere feinteiliges Calciumsulfat-Dihydrat mit einer maximalen Korngröße von 100 µm, etwa REA-Gips oder Chemiegips. Diese Gipse fallen feucht an und sind vor dem Calcinieren auf < 0,2 Masse-% Feuchte zu trocknen.

Das Verfahren kann in Drehrohröfen durchgeführt werden. Dabei kann das Heizmedium im Gleich-, Quer- oder Gegenstrom zum Materialstrom geführt werden. Durch entsprechende apparative Gestaltung der Drehrohröfen wie z.B. Wehre, Blenden, Wendelschnecken od.dgl. ist eine entsprechende Verweilzeit des Materials bei der erforderlichen Temperatur in den vorgesehenen Intervallen einstellbar.

In einem Drehrohrofen kann zunächst die erste Stufe des Verfahren durchgeführt werden. Durch entsprechende Ausbildung unterschiedlicher Temperaturzonen in einem solchen Drehrohrofen kann sich in diesem auch die zweite Stufe des Verfahrens anschließen. Gegebenenfalls kann eine Schleuse vorgesehen sein, die zur Aufteilung des Drehrohrofens in zwei Bereiche für die erste und die zweite Behandlungsstufe dient. Es ist jedoch vorzuziehen, die zweite Stufe in einem anderen Aggregat durchzuführen, wobei dies chargenweise in entsprechenden Kochern oder kontinuierlich in einem weiteren Drehrohrofen geschehen kann, in denen nur die entsprechende Temperatur gehalten und eine definierte Wasserdampfatmosphäre aufrechterhalten wird.

Anstelle von Drehrohröfen können als Durchlaufaggregate zum Calcinieren auch Wirbel- oder Fließbettaggregate verwendet werden.

Die erste Stufe ist einerseits mit starker Wasserdampfentwicklung und andererseits mit starker Staubaufwirbelung verbunden, so daß die aus der ersten Stufe des Verfahrens abgeführten Wasserdampfbrüden stark staubbeladen sind. Der Staub kann beispielsweise über Zyklone abgeschieden und dem Material der zweiten Stufe zugeführt werden.

Außerdem kann Wasserdampf der ersten Stufe zur Einstellung einer definierten Wasserdampfatmosphäre in der zweiten Stufe verwendet werden, und zwar mit einem Wasserdampfpartialdruck im Bereich von etwa 200 bis 900 mbar. Auch in der ersten Stufe wird durch entsprechende Brüdenabführung vorzugsweise ein Wasserdampfpartialdruck im Bereich von etwa 200 bis 900 mbar aufrechterhalten.

Um ein definiertes Temperatur-Verweilszeit-Spektrum des Materials in den beiden Stufen des Verfahrens zu erhalten, ist es zweckmäßig, das Material mittels einer Schnecke od.dgl. zu fördern.

Die durchschnittliche Verweildauer des Materials in der zweiten Stufe des Verfahrens beträgt zweckmäßigerweise etwa 10 bis 120 min, vorzugsweise etwa 30 bis 60 min.

### Beispiel

Als Ausgangsmaterial wird feinteiliges Calciumsulfat-Dihydrat aus der Rauchgasentschwefelung (REA-Gips) eingesetzt, das auf < 0.1 Gew.-% Feuchte getrocknet wurde und eine Reinheit von 98% aufwies.

Eine erste Calcinierstufe (Vorcalcinierungsstufe) wurde in einem Drehrohrofen während 40 min bei 130°C und 0,2 bar Wasserdampfpartialdruck durchgeführt.

Danach folgte eine zweite Calcinierstufe im Drehrohrofen während 100 min bei 130°C und 0,7 bar Wasserdampfpartialdruck.

Das so calcinierte Produkt zeigte bezogen auf den 98-prozentigen Dihydratgehalt im REA-Gips folgende Phasenzusammensetzung:
Calciumsulfat-β-Halbhydrat: 100 Gew.-%
calciumsulfat-Anhydrit-III: nicht nachweisbar
Calciumsulfat-Dihydrat: nicht nachweisbar

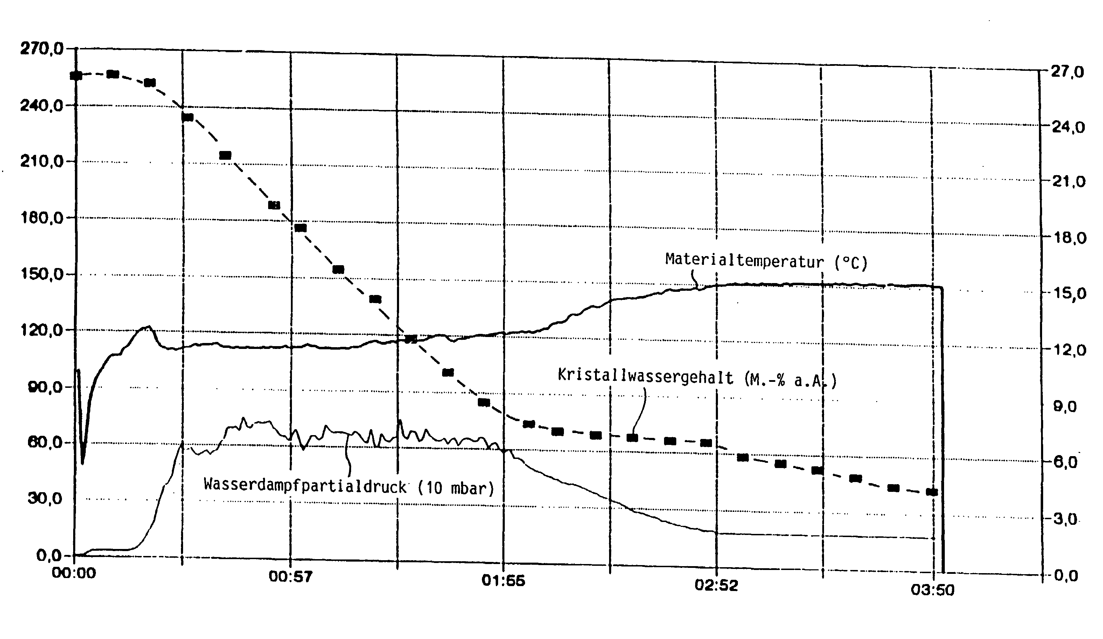

## Patentansprüche

1. Verfahren zur Herstellung von Calciumsulfat β-Halbhydrat, bei dem als Rohstoff ein feinteiliges Calciumsulfat-Dihydrat, insbesondere REA-Gips, im trockenen Zustand mit einem Feuchtigkeitsgehalt von <0,2 Masse % in einem Calcinieraggregat kontinuierlich durch entsprechende Wärmeeinwirkung teilentwässert wird, wobei in einer ersten Stufe das feinteilige Calciumsulfat-Dihydrat (Rohstoff) auf eine Temperatur von 110 bis 140°C erhitzt und bis zu einem Kristallwassergehalt von 6-9 Masse% entwässert wird und danach in einer zweiten Stufe auf einer Temperatur von 110 bis 140°C unter definierter Wasserdampfatmosphäre von 200 bis 900 mbar Wasserdampfpartialdruck solange gehalten wird, bis praktisch phasenreines Calciumsulfat β-Halbhydrat vorliegt.

2. Verfahren nach Anspruch 1 **dadurch gekennzeichnet, daß** das calcinierte Material nach der zweiten Stufe auf eine Temperatur von 40 bis 70°C, insbesondere 50 bis 60°C, abgekühlt und auf dieser Temperatur unter definierter Wasserdampfatmosphäre gehalten wird.

3. Verfahren nach einem der Ansprüche 1 und 2, **dadurch gekennzeichnet, daß** das in der ersten Stufe calcinierte Material 10 bis 120 Minuten und 30 bis 60 Minuten in der zweiten Stufe behandelt wird.

4. Verfahren nach einem der Ansprüche 1 bis 3, **dadurch gekennzeichnet, daß** in der ersten Stufe eine Wasserdampfatmosphäre mit einem Wasserdampfpartialdruck von 200 bis 900 mbar eingestellt wird.

5. Verfahren nach einem der Ansprüche 1 bis 5, **dadurch gekennzeichnet, daß** das feinteilige Calciumsulfat-Dihydrat kontinuierlich in ein Durchlaufaggregat aufgegeben wird und dieses im Gleich- oder Querstrom zum hindurchgeführten Material beheizt wird.

6. Verfahren nach einem der Ansprüche 1 bis 6, **dadurch gekennzeichnet, daß** die zweite Stufe in einem Durchlaufaggregat durchgeführt wird.

7. Verfahren nach Anspruch 6 **dadurch gekennzeichnet, daß** die erste und die zweite Stufe im selben Durchlaufaggregat durchgeführt wird.

8. Verfahren nach einem der Ansprüche 1 bis 7, **dadurch gekennzeichnet, daß** Staub aus der ersten Stufe nach Abscheiden aus in der ersten Stufe entstandenen Wasserdampfbrüden dem zur zweiten Stufe überführten Material Zugesetzt wird.

9. Verfahren nach einem der Ansprüche 1 bis 8, **dadurch gekennzeichnet, daß** Wasserdampf aus der ersten Stufe zur Einstellung der Wasserdampfatmosphäre in der zweiten Stufe verwendet wird.

## Claims

1. Method of manufacturing calcium sulphate β-hemihydrate, in which a fine-grained calcium sulphate dihydrate, particularly gypsum from a flue gas desulphurisation installation, constituting a raw material, in the dry state with a moisture content of <0.2 mass % is continuously partially dewatered in a calcining installation by the appropriate action of heat, whereby, in a first stage, the fine grained calcium sulphate dihydrate (raw material) is heated to a temperature of 110 to 140°C and is dewatered to a crystal water content of 6-9 mass % and thereafter, in a second stage, is held at a temperature of 110 to 140°C under a defined water vapour atmosphere of 200 to 900 mbar water vapour partial pressure until practically phase-pure calcium sulphate β-hemihydrate is present.

2. Method as claimed in Claim 1, **characterised in that** after the second stage, the calcined material is cooled to a temperature of 40 to 70°C, particularly 50 to 60°C, and is held at this temperature under a defined water vapour atmosphere.

3. Method as claimed in one of Claims 1 and 2, **characterised in that** the calcined material is treated in the first stage for 10 to 120 minutes and in the second stage for 30 to 60 minutes.

4. Method as claimed in one of Claims 1 to 3, **characterised in that** a water vapour atmosphere is employed in the first stage with a water vapour partial pressure of 200 to 900 mbar.

5. Method as claimed in one of Claims 1 to 5, **characterised in that** the fine grained calcium sulphate dihydrate is supplied continuously into a continuous flow installation and the latter is heated in co-current or counter-current to the material conducted through it.

6. Method as claimed in one of Claims 1 to 6, **characterised in that** the second stage is performed in a continuous flow installation.

7. Method as claimed in Claim 6, **characterised in that** the first and second stages are performed in the same continuous flow installation.

8. Method as claimed in one of Claims 1 to 7, **characterised in that** after separation from the water vapours produced in the first stage, dust from the first stage is added to the material transferred to the second stage.

9. Method as claimed in one of Claims 1 to 8, **characterised in that** water vapour from the first stage is used to produce the water vapour atmosphere in the second stage.

## Revendications

1. Procédé de production de sulfate de calcium β hémihydraté dans lequel, comme matière première, un sulfate de calcium dihydraté à éléments fins, en particulier du plâtre d'anhydrite de désulfuration de fumées, à l'état sec avec une humidité inférieure à 2 % en masse est partiellement déshydraté de façon continue dans un appareil de calcination par action appropriée de chaleur, le sulfate de calcium dihydraté à éléments fins (matière première) étant, dans une première étape, chauffé à une température de 110 à 140 °C et déshydraté jusqu'à une teneur en eau de cristallisation de 6 à 9 % en masse, et ensuite, dans une deuxième étape, maintenu à une température de 110 à 140 °C sous atmosphère de vapeur d'eau définie ayant une pression partielle de vapeur d'eau de 200 à 900 mbar jusqu'à ce que soit obtenu du sulfate de calcium β hémihydraté pratiquement pur.

2. Procédé selon la revendication 1, **caractérisé par le fait que** la matière calcinée est, après la deuxième étape, refroidie à une température de 40 à 70 °C, en particulier de 50 à 60 °C, et maintenue à cette température sous atmosphère de vapeur d'eau définie.

3. Procédé selon l'une des revendications 1 et 2, **caractérisé par le fait que** la matière calcinée dans la première étape est traitée pendant 10 à 120 minutes et 30 à 60 minutes dans la deuxième étape.

4. Procédé selon l'une des revendications 1 à 3, **caractérisé par le fait que** dans la première étape est établie une atmosphère de vapeur d'eau ayant une pression partielle de vapeur d'eau de 200 à 900 mbar.

5. Procédé selon l'une des revendications 1 à 4, **caractérisé par le fait que** le sulfate de calcium dihydraté à élément fins est chargé de façon continue dans un appareil continu et celui-ci est chauffé en courant parallèle ou en courant transversal par rapport à la matière qui le traverse.

6. Procédé selon l'une des revendications 1 à 5, **caractérisé par le fait que** la deuxième étape est exécutée dans un appareil continu.

7. Procédé selon la revendication 6, **caractérisé par le fait que** la première et la deuxième étapes sont exécutées dans le même appareil continu.

8. Procédé selon l'une des revendications 1 à 7, **caractérisé par le fait que** la poussière provenant de la première étape est, après avoir été séparée de la vapeur d'eau produite dans la première étape, ajoutée à la matière transférée à la deuxième étape.

9. Procédé selon l'une des revendications 1 à 8, **caractérisé par le fait que** la vapeur d'eau provenant de la première étape est utilisée pour l'établissement de l'atmosphère de vapeur d'eau dans la deuxième étape.
